Europäisches Patentamt

European Patent Office

Office européen des brevets

(11) Publication number: **0 419 433 A1**

# EUROPEAN PATENT APPLICATION

(21) Application number: 90850311.3

(51) Int. Cl.⁵: **B01D 53/26**

(22) Date of filing: **19.09.90**

(30) Priority: **22.09.89 SE 8903116**

(43) Date of publication of application:
**27.03.91 Bulletin 91/13**

(84) Designated Contracting States:
**AT BE CH DE DK ES FR GB GR IT LI LU NL SE**

(71) Applicant: **Hamrin, Alf Johan**
**Norevägen 54 B**
**S-182 64 Djursholm(SE)**

(72) Inventor: **Hamrin, Alf Johan**
**Norevägen 54 B**
**S-182 64 Djursholm(SE)**

(74) Representative: **Barnieske, Hans Wolfgang**
**c/o H.W. Barnieske Patentbyrä AB S:ta**
**Ragnhildsgatan 24-26 P.O. Box 25**
**S-151 21 Södertälje 1(SE)**

(54) **Adsorption drying plant.**

(57) An adsorption drying plant comprising two drying towers connected on the outlet side to a flow-controlled three-way non-return valve (40) of the swinging flap type. The gas inlet is connected to a corresponding three-way valve (30) which conducts the gas to be dried to one or other of the drying towers (3, 3′). A leakage air pipe is connected in parallel with the three-way valve on the outlet side of the plant and contains a shut-off valve (99).

Push-pull connected draining valves (18, 18′) are connected to the inlet pipes (10, 10′) of the tower. The valve (99) is arranged to close when the vessel under regeneration has been regenerated and cooled. The valve (99) is opened when it is desired to shift vessel and the draining valve (18′) of the regenerated vessel (3′) is kept closed. Thereafter the draining valve (18) of the second vessel (3) is opened in order to shift vessels.

# ADSORPTION DRYING PLANT

## FIELD OF THE INVENTION

The present invention relates to an adsorption drying plant comprising an inlet pipe for the gas to be dried, an outlet pipe for the dried gas and two vessels connected in parallel and containing dessicant, a flow-controlled tree-way non-return flap valve connecting the outlet pipe to the outlet side of the vessel as considered in the main direction of through-flow, the valve being of the type provided with a flap which is tilted by the flow to tight abutment against one or the other of two seats forming the ends of respective gas-flow channels, and a three-way valve connecting the inlet pipe to the inlet sides of the vessels, the plant also comprising draining valves connected before each vessel as considered in the main direction of flow of the gas, in order to remove moisture during a regeneration phase during wich adsorbed moisture is removed from the dessicant in one or other of the vessels, means being provided for dried gas to leak to the container undergoing regeneration, in a direction opposite to the through-flow direction of the gas during the adsorption phase.

## BACKGROUND OF THE INVENTION

Various adsorption drying plants are already known and include a heating means heating the flow of air which flows "backwards" through the adsorption agent during the regeneration phase. The heating means may adantageously be located centrally in each vessel so that the heat can be better utilized for regeneration purposes.

In a regeneration process a dry leakage flow of the compressed air is caused to flow "backwards" through the vessel under regeneration, the air being heated by the heating means so that moisture is removed through the open draining valve. After for instance 75 % of the regeneration time heating is discontinued while the leakage air is allowed to continue its passage through the bed, cooling the bed as it passes.

The three-way valve at the gas inlet to the plant may be mechanically controlled by setting devices but this means that the apparatus is relatively large and the control function becomes more complicated.

An alternative is to allow the three-way valve located at the gas inlet to be also of flow-controlled design. When one tower has been regenerated and cooled its draining valve is closed and pressure equalization occurs, i.e. the regenerated vessel acquires substantially the same pressure as the rest of the plant. Thanks to the flow and pressure relationship the flap valve is now able to assume a position mid-way between the two valve seats so that for a certain time the gas flow can flow in parallel through both vessels. This is not disadvantageous when shifting between the vessels occurs in accordance with a specific time schedule, since the shift will then occur a very short time after pressure equalization.

One disadvantage has been obeserved if a delay is desired before shifting - e.g. when the dessicant in each tower has only been utilized to a small extent of its capacity.

## SUMMARY OF THE INVENTION

According to the aspect of the invention there is provided a method permitting optional setting of the moment for shifting between the vessels, based for instance on the moisture content of the air being dried in the plant, a timer, an air quantity gauge or the like. Another object of the invention is to offer a method which prevents the gas flow from flowing in parallel through both vessels for a certain time during pressure equalization between the vessels.

The objects of the invention are achieved using a plant as defined in the appended claim.

Embodiments of the plant are defined in the appended sub-claims.

According to the embodiment of the invention, thus, an air leakage pipe may be connected to the two pipes connecting the vessels to the outlet valve, the air leakage valve containing a shut-off valve. The shut-off valve may be arranged to close once regeneration of the vessel under regeneration and cooling is complete. Subsequently opening the shut-off valve so that pressure equalization occurs, and thereafter opening the draining valve pertaining to the other vessel, will cause the plant to shift over to the regenerated vessel within a brief period of time, e.g. 3-5 minutes after the shift has been initiated by closing the shut-off valve. The shut-off valve may be arranged to open due to the influence of a hygrometer or the like which senses a moisture content exceeding a predetermined value in the gas flow leaving the vessel. Alternatively the valve may be opened due to the influence of a timer or the like. When the shut-off valve is kept open, pressure equalization is available to the regenerated vessel provided its draining valve is closed. When pressure equalization has been substantially achieved the draining valve pertaining to the other vessel is opened, whereupon the valve flap is immediately tilted to conduct air through the regenerated vessel.

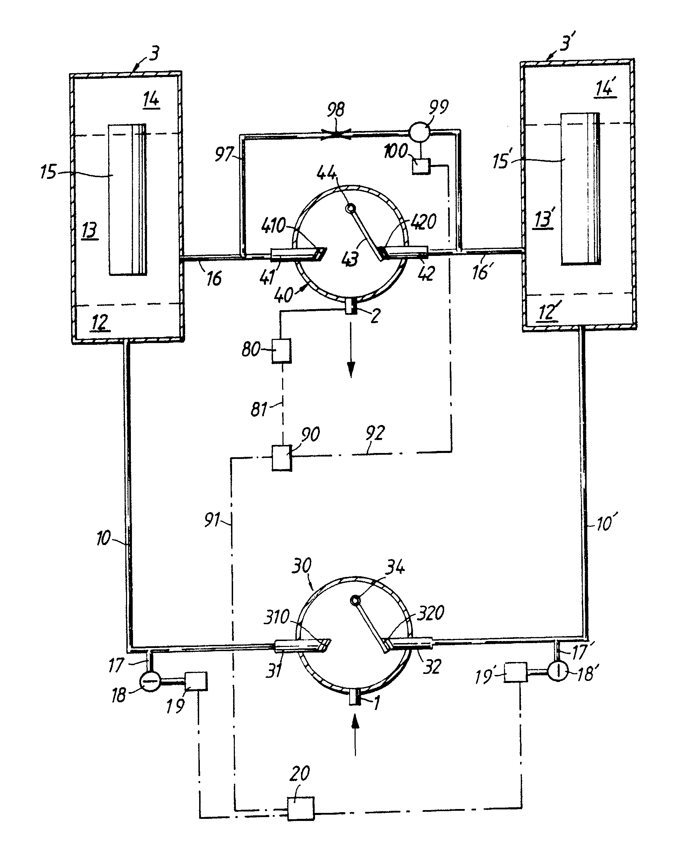

## BRIEF DESCRIPTION OF THE DRAWING

The invention will now be described, by way of example, with reference to the accompanying drawing.

The drawing shows one embodiment of an air drier according to the invention.

The drawing shows an inlet pipe 1, an outlet pipe 2, two drying towers 3, 3', the towers being connected in parallel, or rather in tandem, between the two pipes 1, 2. The drying towers 3, 3', are thus connected on the inlet and outlet sides to the inlet pipe 1 and outlet pipe 2, respectively, via three-way non-return valves 30, 40 of the swinging flap type.

In conventional manner the drying towers 3, 3' comprise lower and upper gas distribution spaces 12, 14, between which is an adsorption medium 13, such as silica gel, through which the gas to be dried flows. The towers 3, 3' are suitably provided with heating means 15, 15' which are preferably arranged inside and element housing within the compund 13, the adsorption medium, in order to minimize heat losses. The heating means 15 are preferably in the form of electric cartridges.

The valve 30 is provided with two pipe connections 31, 32, the annular seats 310, 320 of which facing away from each other may be formed by O-rings or by a stretch member. A flap 33 pivotably suspended from an axle 34 is arranged to provide a tight seal against one or other of the seats 310, 320 in its end positions. In rest position, determined by its dead weight, the flap is located between the two valve seats. The valve 30 is connected to the towers 3, 3' via a pipe 10, 10', respectively. The pipe 10, 10' contains a draining valve 18, 18', respectively, which is normally closed but which can be held in open position by an activated setting device 19.

In principle the construction of valve 40 is the same as valve 30. However, the directions of through-flow are opposite in relation to valve 30.

A leakage air pipe 97 with throttle 98 is connected between the two pipes 16, 16'. The pipe 97 contains a shut-off valve 99 with setting device 100.

The setting device 100 is controlled by regulating device 90 which may be controlled by a hygrometer 80 or by a timer or the like.

The hygrometer 80 is arranged to sense the moisture content in the dried air leaving through the pipe 2 and is connected via a conduit 81 to the regulating device 90 which also influences/controls setting devices 19, 19' via a control unit 20.

The plant can be used for drying substantially any gas and the moisture in the gas may comprise various substances, as will be understoood by one skilled in the art. However, the invention is described here and in the following with particular application to compressed air from which water is to be removed.

The plant operates as follows:
Moist compressed air enters through pipe 1 and leaves through the left-hand pipe connection 31 to the pipe 10 since the pipe connection 32 is kept closed by the flap 33. Valve 18 is closed and valve 18' open. Compressed air thus passes through the distributing chamber 12 and is dehumidified in the dessicant 13. It then flows out through the heater 15 and pipe 16 to the lefthand inlet 41 in the valve 40 and on through its outlet 2 where the dry compressed air passes the moisture sensor 80. It is obvious from the valves 30 and 40 that the tower 3' is now substantially disconnected from the plant, but it is evident that a small amount of compressed air passes to the right through the leakage pipe 97 to the pipe 16' and then up through the heater 15' where this small flow of compressed air is possibly heated and then flows up into the distribution space 14' and subsequently down through the moist adsorption medium 13', removing the water therefrom. The water evaporates down through the distribution space 12', pipe 10', out through the draining pipe 17' and then through the open valve 18, held open by the control device 19' and timer 20.

At the end of the regeneration and cooling phase for the tower 3 the valve 18' should normally close in order to prevent loss of compressed air. However, pressure equalization will then start across the valve flap 33. This pressure equalization may result in the flap 33 leaving the seat 320 and assuming a vertical position so that the compressed air from pipe 1 is split into two flows, one through each of the towers 3 and 3', for a certain time. In order to prevent this, and to enable switching between the vessels to be controlled by a criterium other than regeneration of one vessel being complete, the regulating device 90 is arranged to close the valve 99 when regeneration and cooling is complete according to some criterium. A control signal can then be awaited indicating the suitability of shifting vessels. The hygrometer 80 can give such a signal. If the hygrometer 80 indicates that it is advisable to shift vessels, the valve 99 will be opened and the draining valve kept closed so that pressure equalization occurs in the regenerated vessel, whereupon the draining valve pertaining to the other vessel is opened and the valve 30 is reversed.

The use of valve seats clad with conventional O-rings for both valves 30, 40 facilitates maintenance of the valves by replacing the O-rings at suitable intervals.

The heaters 15, 15' may be connected for 3/4 of the estimated regeneration time, for instance, starting immediately after shifting between the vessels.

Three-way non-return valves of the swinging flap type, such as those illustrated for valves 30, 40 in the drawing, are known per se from US Patents 1 581 595 or 2 767 738, for instance.

Once opened, the valve 99 is suitably arranged to remain open until the next cooling period is finished. Valve 99 is controlled by control device 90.

## Claims

1. An adsorption drying plant comprising an inlet pipe (1) for the gas to be dried, an outlet pipe (2) for the dried gas and two vessels (3, 3') connected in parallel and containing dessicant, a flow-controlled three-way non-return valve (40) of the swinging flap type connecting the outlet pipe to the outlet side of the vessel, the valve also being provided with a flap which is tilted by the flow to tight abutment against one or the other of two seats forming the ends of respective gas-flow channels, and a three-way valve (30) connecting the inlet pipe (1) to the inlet (10, 10') in vessel (3, 3'), the plant also comprising draining valves (18, 18') connected before each vessel as considered in the main direction of flow of the gas, in order to remove moisture during a regeneration phase during which adsorbed moisture is removed from the dessicant in one or other of the vessels, means (97, 98) being provided for gas from the main flow to leak to the container undergoing regeneration, in a direction opposite to the through-flow direction of the gas in said vessel during the adsorption phase, **characterized** in that the three-way valve connected to the inlet pipe is flow-controlled and means (99, 100, 90, 20) are arranged to retain the valve flap in the three-way valve (30) connected in the inlet pipe (1) in the position it assumes when a proper shift between the vessels has occured, until immediately prior to the gas flow being shifted to pass through the vessel which has just been regenerated.

2. A plant as claimed in claim 1, **characterized** in that the means permitting leakage is an air leakage pipe (97, 98) connecting together the outlet pipes (16, 16') of the two vessels (3, 3') wherein the retaining means comprises a shut-off valve (99, 100) in the air leakage pipe (97, 98) and wherein control means (80, 90) are arranged to close the shut-off valve (99, 100) when regeneration of a vessel is complete, e.g. when the vessel, subsequent to regeneration, has been cooled to a value below a predetermined level, and wherein the active vessel is arranged to be opened after the regenerated vessel has been pressure-equalized by its shut-off valve (99, 100) having been kept open and its draining valve having been kept closed.

3. A plant as claimed in claim 1 or 2, **characterized** in that a control means in the form of a hygrometer (80) which senses a limit value for the moisture content in air leaving the plant, a timer or the like, is arranged to open the shut-off valve for pressure-equalization of the regenerated vessel and to close its draining valve, and subsequent to pressure-equalization to open the draining valve of the active vessel in order to ensure an immediate shift between the two vessels (3, 3').

European
Patent Office

EUROPEAN SEARCH
REPORT

Application Number

EP 90 85 0311

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 003 022  (PALL)  – – – | | B 01 D 53/26 |
| A | GB-A-2 053 020  (S T I STRUMENTAZIONE INDUSTRIALE S.p.A.)  – – – | | |
| A | US-A-3 513 631  (C.F. SEIBERT)  – – – | | |
| A | US-A-3 448 561  (C.F. SEIBERT)  – – – – – | | |

TECHNICAL FIELDS
SEARCHED (Int. Cl.5)

B 01 D

The present search report has been drawn up for all claims

| Place of search | Date of completion of search | Examiner |
|---|---|---|
| The Hague | 28 November 90 | BOGAERTS M.L.M. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document